# EUROPEAN PATENT SPECIFICATION

(11) **EP 1 862 502 B1**
(45) Date of publication and mention of the grant of the patent: **13.08.2008**
(21) Application number: 06011131.7
(22) Date of filing: 30.05.2006
(51) Int. Cl.: C08K 5/54

(54) **A silicon containing compound as pH controlling agent in polymer compositions**
Silizium enthaltende Vebindung als pH Kontrollmittel in Polymerzusammensetzungen
Composé contenant de silicium comme agent de contrôle du PH dans des compositions à base de polymères

(43) Date of publication of application: 05.12.2007
(73) Proprietor: Borealis Technology Oy, 06101 Porvoo (FI)
(72) Inventor: Carlsson, Roger, 43270 Säve (SE)
(74) Representative: Kador & Partner

(56) References cited:
- EP-A1- 0 940 448
- EP-A1- 0 985 705

## Description

The present invention relates to the use of a silicon containing compound as pH controlling agent in polymer compositions comprising a Brönsted acid.

Polymer compositions often comprise several polymeric components, as for example polymer resins with different properties, such as different molecular weights, or different content of comonomer. Furthermore, organic and/or inorganic additives such as stabilizers are usually present in a polymer composition. The nature and amount of these polymer resins and these additives is dependent on the particular use a polymer composition is designed for.

Depending on the specific type of the polymer composition and on its application, the polymer composition may comprise a Brönsted acid. This is for example the case in polyolefin compositions which comprise a crosslinkable polyolefin with hydrolysable silane groups and a silanol condensation catalyst which comprises a Brönsted acid, e.g. a sulphonic acid.

The resulting compositions have an acidic behaviour if a Brönsted acid, particularly a strong Brönsted acid as for example a sulphonic acid is present in the composition. The acidic ingredient of the composition may cause unfavourable effects on the environment or on other ingredients of the composition.

Hence, other ingredients may be affected in their desired properties and material in contact with the compositions may also be affected.

It is hence an object of the present invention to provide a pH controlling agent for use in polymer compositions, thereby avoiding unfavourable effects on material in contact with the polymer compositions or within the polymer compositions.

In the present application the term "pH controlling agent" denotes a chemical which avoids the change of acidity in the polymer composition if a Brönsted acid or base is added to the polymer composition.

It has now surprisingly been found that the above given object can be achieved by using a silicon containing compound as pH controlling agent in a polymer composition.

The present invention therefore provides the use of a silicon containing compound as pH controlling agent in a polymer composition comprising a Brönsted acid, wherein the silicon containing compound has a structure according to the formula

(R¹)ₓ[Si(R²)_{y}(R³)_{z}]ₘ (I)

wherein
R¹, which may be the same or different if more than one such group is present, is a monofunctional, or, if m = 2, is a bifunctional, hydrocarbyl residue comprising from 1 to 100 carbon atoms;
R², which may be the same or different if more than one such group is present, is a hydrocarbyloxy residue comprising from 1 to 100 carbon atoms;
R³, is R⁴SiR¹ₚR²_{q}, wherein
   p is 0 to 3, preferably 0 to 2,
   q is 0 to 3, preferably 1 to 3,
   with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹-, where R¹ and R² are as previously defined; and
x is 0 to 3, y is 1 to 4, z is 0 or 1, with the proviso that x + y + z = 4;
and m = 1 or 2.

The use according to the invention results in a control of the acidity within the polymer composition and therefore avoids any unfavourable effects on material in contact with the compositions or within the composition.

In a preferred embodiment the polymer compositions according to the invention a polyolefin compositions.

Preferably, the silicon containing compound has a high compatibility with the polymer composition which means that even after treatment of the composition at elevated temperature for several hours the major part of the silicon containing compound does not volatise from the composition. The compatibility of the silicon containing compound can be adjusted by appropriate selection of, especially, group R¹, which should be chosen sufficiently large and non-polar.

Further on, preferably, in formula (I) for the silicon containing compound:
R¹, which may be the same or different if more than one such group is present, is an alkyl, arylalkyl, alkylaryl or aryl group containing 1 to 40 carbon atoms, with the proviso that if more than one R¹ group is present the total number of carbon atoms of the R¹ groups is at most 60,
and more preferably:
R¹, which may be the same or different if more than one such group is present, is a linear or branched C₆- to C₂₂-alkyl, still more preferably is a C₈- to C₂₀-alkyl group.

Furthermore, preferably in formula (I) for the silicon containing compound:
R², which may be the same or different if more than one such group is present, is an alkoxy, aryloxy, alkylaryloxy, or arylalkyloxy group containing 1 to 15 carbon atoms, with the proviso that if more than one R² group is present the total number of carbon atoms in the alkyl moieties of the R² groups is at most 40,
more preferably:
R², which may be the same or different if more than one such group is present, is a linear or branched C₁- to C₁₀-alkoxy, still more preferably is a C₁- to C₈-alkoxy, still more preferably is a C₁- to C₄-alkoxy, and most preferably is a methoxy, ethoxy, propoxy, or 1-butoxy group.

The alkyl moieties of R¹ and R² may be linear or branched.

R¹ and R² may comprise heteroatom substituents, however, preferably R¹ and R² are free of any heteroatom substituents.

Preferably, in formula (I) x = 1.

Furthermore, preferably in formula (I) y = 3.

Still further, preferably in formula (I) z = 0.

Finally, preferably in formula (I) m = 1.

Preferred silicon containing compounds are also all those compounds which are combinations of any of the above-mentioned preferred embodiments for any of the parameters of formula (I).

In a particularly preferred embodiment, the silicon containing compound comprises, more preferably consists of, hexadecyl trimethoxy silane.

The amount of the silicon containing compound in the polymer composition preferably is from 0.001 to 5 wt% of the total composition, more preferably from 0.01 to 2.5 wt% of the total composition and most preferably from 0.5 to 1.5 wt% of the total composition.

In a preferred embodiment the polymer compositions according to the invention is a polyolefin composition.

It is known to cross-link polyolefins by means of additives as this improves the properties of the polyolefin such as mechanical strength and chemical heat resistance. Cross-linking may be performed by condensation of silanol groups contained in the polyolefin which can be obtained by hydrolysation of silane groups. A silane compound can be introduced as a cross-linkable group e.g. by grafting the silane compound onto a polyolefin, or by copolymerisation of olefin monomers and silane group containing monomers. Such techniques are known e.g. from US 4,413,066, US 4.297,310, US 4,351,876, US 4,397,981, US 4,446,283 and US 4,456,704.

For cross-linking of such polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463. The contents of this document is enclosed herein by reference.

In a preferred embodiment of the invention, the polyolefin composition in which the above described silicon containing compound is used as a pH controlling agent comprises a crosslinkable polyolefin with hydrolysable silane groups. The Brönsted acid present in the composition is then used as a silanol condensation catalyst.

In this embodiment the silicon containing compound, preferably, is compatible with the composition insofar as it, when having been present in the composition in an initial amount corresponding to 0.060 mole hydrolysable groups per 1000 g composition, after a storage at 60 °C for 74 h in air is still present in the composition at least in an amount corresponding to 0.035 mole hydrolysable groups per 1000 g composition.

The Brönsted acids may comprise inorganic acids such as sulphuric acid and hydrochloric acid, and organic acids such as citric acid, stearic acid, acetic acid, sulphonic acid and alkanoic acids as dodecanoic acid, or a precursor of any of the compounds mentioned.

Preferably, the Brönsted acid is a sulphonic acid, more preferably an organic sulphonic acid.

Still more preferably, the Brönsted acid is an organic sulphonic acid comprising 10 C-atoms or more, more preferably 12 C-atoms or more, and most preferably 14 C-atoms or more, the sulphonic acid further comprising at least one aromatic group which may e.g. be a benzene, naphthalene, phenantrene or anthracene group. In the organic sulphonic acid, one, two or more sulphonic acid groups may be present, and the sulphonic acid group(s) may either be attached to a non-aromatic, or preferably to an aromatic group, of the organic sulphonic acid.

Further preferred, the aromatic organic sulphonic acid comprises the structural element:

Ar(SO₃H)ₓ (II)

with Ar being an aryl group which may be substituted or non-substituted, and x being at least 1.

The organic aromatic sulphonic acid silanol condensation catalyst may comprise the structural unit according to formula (II) one or several times, e.g. two or three times. For example, two structural units according to formula (II) may be linked to each other via a bridging group such as an alkylene group.

Preferably, Ar is a aryl group which is substituted with at least one C₄- to C₃₀-hydrocarbyl group, more preferably C₄- to C₃₀-alkyl group.

Aryl group Ar preferably is a phenyl group, a naphthalene group or an aromatic group comprising three fused rings such as phenantrene and anthracene.

Preferably, in formula (II) x is 1, 2 or 3, and more preferably x is 1 or 2.

Furthermore, preferably the compound used as organic aromatic sulphonic acid silanol condensation catalyst has from 10 to 200 C-atoms, more preferably from 14 to 100 C-atoms.

In one preferred embodiment, Ar is a hydrocarbyl substituted aryl group and the total compound containing 14 to 28 carbon atoms, and still further preferred, the Ar group is a hydrocarbyl substituted benzene or naphthalene ring, the hydrocarbyl radical or radicals containing 8 to 20 carbon atoms in the benzene case and 4 to 18 atoms in the naphthalene case.

It is further preferred that the hydrocarbyl radical is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds are dodecyl benzene sulphonic acid and tetrapropyl benzene sulphonic acid.

The silanol condensation catalyst may also be precursor of the sulphonic acid compound, including all its preferred embodiments mentioned, i.e. a compound that is converted by hydrolysis to such a compound. Such a precursor is for example the acid anhydride of a sulphonic acid compound, or a sulphonic acid that has been provided with a hydrolysable protective group, as e.g. an acetyl group, which can be removed by hydrolysis.

In a second preferred embodiment, the sulphonic acid catalyst is selected from those as described in EP 1 309 631 and EP 1 309 632, namely
a) a compound selected from the group of
   (i) an alkylated naphthalene monosulfonic acid substituted with 1 to 4 alkyl groups wherein each alkyl group is a linear or branched alkyl with 5 to 40 carbons with each alkyl group being the same or different and wherein the total number of carbons in the alkyl groups is in the range of 20 to 80 carbons;
   (ii) an arylalkyl sulfonic acid wherein the aryl is phenyl or naphthyl and is substituted with 1 to 4 alkyl groups wherein each alkyl group is a linear or branched alkyl with 5 to 40 carbons with each alkyl group being the same or different and wherein the total number of carbons in the alkyl groups is in the range of 12 to 80;
   (iii) a derivative of (i) or (ii) selected from the group consisting of an anhydride, an ester, an acetylate, an epoxy blocked ester and an amine salt thereof which is hydrolysable to the corresponding alkyl naphthalene monosulfonic acid or the arylalkyl sulfonic acid;
   (iv) a metal salt of (i) or (ii) wherein the metal ion is selected from the group consisting of copper, aluminium, tin and zinc; and
b) a compound selected from the group of
   (i) an alkylated aryl disulfonic acid selected from the group consisting of the structure (III): 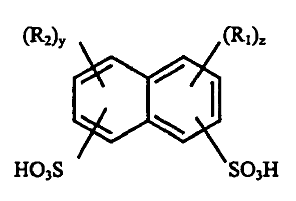 and the structure (IV): 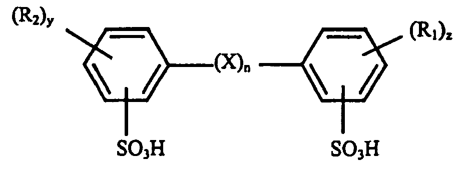 wherein each of R₁ and R₂ is the same or different and is a linear or branched alkyl group with 6 to 16 carbons, y is 0 to 3, z is 0 to 3 with the proviso that y + z is 1 to 4, n is 0 to 3, X is a divalent moiety selected from the group consisting of -C(R₃)(R₄)-, wherein each of R₃ and R₄ is H or independently a linear or branched alkyl group of 1 to 4 carbons and n is 1; -C(=O)-, wherein n is 1; -S-, wherein n is 1 to 3 and -S(O)₂-, wherein n is 1; and
   (ii) a derivative of (i) selected from the group consisting of the anhydrides, esters, epoxy blocked sulfonic acid esters, acetylates, and amine salts thereof which is a hydrolysable to the alkylated aryl disulfonic acid,
   together with all preferred embodiments of those sulphonic acids as described in the mentioned European Patents.

Preferably, in the polyolefin composition the silanol condensation catalyst is present in an amount of 0.0001 to 6 wt%, more preferably of 0.001 to 2 wt%, and most preferably 0.02 to 0.5 wt%.

Preferably, the cross-linkable polyolefin comprises, still more preferably consists of, a polyethylene containing hydrolysable silane groups.

The hydrolysable silane groups may be introduced into the polyolefin by copolymerisation of e.g. ethylene monomers with silane group containing comonomers or by grafting, i.e. by chemical modification of the polymer by addition of silane groups mostly in a radical reaction. Both techniques are well known in the art.

Preferably, the silane group containing polyolefin has been obtained by copolymerisation. In the case of polyolefins, preferably polyethylene, the copolymerisation is preferably carried out with an unsaturated silane compound represented by the formula

R¹SiR²_{q}Y_{3-q} (V)

wherein
R¹ 1 is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

A preferred unsaturated silane compound is represented by the formula

CH₂=CHSi(OA)₃ (VI)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin, e.g. ethylene, and the unsaturated silane compound may be carried out under any suitable conditions resulting in the copolymerisation of the two monomers.

Moreover, the copolymerisation may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)-acrylate, are preferred.

Especially preferred comonomers are butyl acrylate, ethyl acrylate and methyl acrylate.

Two or more such olefinically unsaturated compounds may be used in combination. The term "(meth)acrylic acid" is intended to embrace both acrylic acid and methacrylic acid. The comonomer content of the copolymer may amount to 70 wt% of the copolymer, preferably about 0.5 to 35 wt%, most preferably about 1 to 30 wt%.

If using a graft polymer, this may have been produced e.g. by any of the two methods described in US 3,646,155 and US 4,117,195, respectively.

The silane group containing polyolefin preferably contains 0.001 to 15 wt% of the silane compound, more preferably 0.01 to 5 wt%, most preferably 0.1 to 2 wt%.

The polymer composition may further contain various additives, such as miscible thermoplastics, antioxidants, further stabilizers, lubricants, fillers, colouring agents and foaming agents.

As antioxidant, preferably a compound, or a mixture of such compounds, is used which is neutral or acidic, must comprise a sterically hindered phenol group or aliphatic sulphur groups. Such compounds are disclosed in EP 1 254 923 to be particularly suitable antioxidants for stabilisation of polyolefins containing hydrolysable silane groups which are crosslinked with a silanol condensation catalyst, in particular an acidic silanol condensation catalyst. Other preferred antioxidants are disclosed in WO2005003199A1.

Preferably, the antioxidant is present in the composition in an amount of from 0.01 to 3 wt%, more preferably 0.05 to 2 wt%, and most preferably 0.08 to 1.5 wt%.

The silanol condensation catalyst usually is added to the silane group containing polyolefin by compounding the polymer with a so-called master batch, in which the catalyst, and optionally further additives are contained in a polymer, e.g. polyolefin, matrix in concentrated form.

The silanol condensation catalyst and the silicon containing compound are preferably added to the silane group containing polyolefin by compounding a master batch, which contains the silanol condensation catalyst and the silicon containing compound in a polymer matrix in concentrated form, with the silane group containing polyolefin.

The matrix polymer is preferably a polyolefin, more preferably a polyethylene, which may be a homo- or copolymer of ethylene, e.g. low density polyethylene, or polyethylene-methyl-ethyl-butyl-acrylate copolymer containing 1 to 50 wt% of the acrylate, and mixtures thereof.

As stated, in the master batch the compounds to be added to the silane group containing polyolefin are contained in concentrated form, i.e. in a much higher amount than in the final composition.

The master batch preferably comprises the silanol condensation catalyst in an amount of from 0.3 to 6 wt%, more preferably from 0.7 to 3.5 wt%.

The silicon containing compound preferably is present in the master batch in an amount of from 1 to 20 wt%, more preferably from 2 to 10 wt%.

The master batch preferably is processed with the silane group containing polymer in an amount of from 1 to 10 wt%, more preferably from 2 to 8 wt%.

Compounding may be performed by any known compounding process, including extruding the final product with a screw extruder or a kneader.

The following examples serve to further illustrate the present invention.

### Examples

### 1. Measurement Methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C and may be determined at different loadings such as 2.16 kg (MFR₂) or 21.6 kg (MFR₂₁).

### 2. Compositions Produced

### a) Master batches

Master batches were produced comprising:
- a matrix resin: an ethylene butylacrylate copolymer with 17 wt% butylacrylate, a density of 924 kg/m³ and a MFR₂ of 7.0 g/10 min;
- a silanol condensation catalyst: linear dodecylbenzene sulphonic acid (DDBSA) has been used; or dibutyl tin dilaurate (DBTL) as a conventional silanol condensation catalyst;
- a silicon containing compound: hexadecyl trimethoxy silane (HDTMS),
- an antioxidant: 4-methyl-phenol reaction products with dicyclopentadiene and isobutylene (Ralox LC, CAS-no. 68610-51-5).

The components were used in the master batches in the amounts as indicated in Table 1 (wt%). Compounding of the master batches was performed using a Brabender kneader (small chamber, 47 cm³), and 3 mm thick plates were compression moulded at 180 °C.

**Table 1:**

| | Example 1 | Comparative Example 1 |
|---|---|---|
| Matrix | 88.5 | 92.5 |
| Sulphonic acid | 1.5 | 1.5 |
| DBTL | - | - |
| HDTMS | 4 | - |
| Antioxidant | 6 | 6 |

### b) Compositions

The master batches of Table 1 were processed in an amount of 5 wt% with 95 wt% of a silane group containing polyethylene having a density of 923 kg/m³, a MFR₂ of 0.9 g/10 min and a silane copolymer content of 1.3 wt% in a Brabender tape extruder.

### c) Corrosion behaviour in extruder

In the processing step in the tape extruder mentioned above, the corrosion behaviour was measured. In the tape extruder before the tape die, a special die was installed which was made from soft steel (Ovako 550 ≈ Fc 52) in order to check corrosion. The cylinder in the extrusion was made from nitrated steel and the surface of the screw was chromium-plated. The output was kept low in order to get a residence time which is as long as possible. After 100 h of run the extruder was purged. The following observations were made. When using the master batch of Example 1, the channel of the die was homogenously yellow-brown coloured. The surface area of the metal was analysed with microscopy. It was observed that no corrosion has taken place. The die was further purged for 100 h with an ordinary cleaning resin to clean the channel. After 100 h several corrosion points were observed.

The conclusion is that no corrosion was found after 100 h of operation with the inventive composition. The die was on purpose made of steel that is more prone for corrosion than normal steel types used in extrusions.

In contrast, if the composition of Comparative Example 1 is processed in the same way, considerable corrosion occurs after the first 100 h.

### d) Weight loss due to corrosion

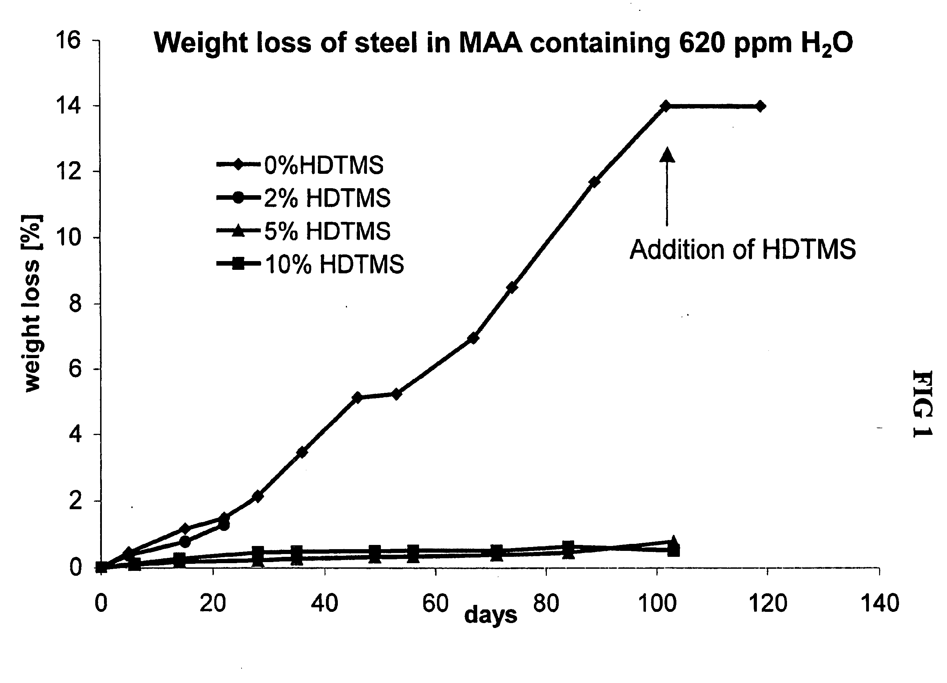

The weight loss of steel in methacrylic acid (MAA) containing 620 ppm of water has been tested with different amounts of HDTMS. Figure 1 shows the results. If no HDTMS is added, considerable weight loss of up to 14 wt% occurs after 100 days. The addition of HDTMS at this point suddenly stops the weight loss, i.e. the corrosion of the steel. If 2 wt% of HDTMS are added, the weight loss is not as high as without HDTMS. Still further, if 5 wt% or 10 wt% are used, the effect is nearly the same, namely a very small or no weight loss is obtained. Therefore, these Examples show that 5 wt% of HDTMS avoid corrosion of the steel.

It shall be noted that 620 ppm water was used in this example. This is an extremely high level of water. Typically in these applications water levels of 100-500 ppm are common.

## Claims

1. Use of a silicon containing compound as pH controlling agent in a polymer composition comprising a Brönsted acid, wherein the silicon containing compound has a structure according to the formula
(R¹)ₓ[Si(R²)_{y}(R³)_{z}]ₘ (I)
wherein
R¹, which may be the same or different if more than one such group is present, is a monofunctional, or, if m = 2, is a bifunctional, hydrocarbyl residue comprising from 1 to 100 carbon atoms;
R², which may be the same or different if more than one such group is present, is a hydrocarbyloxy residue comprising from 1 to 100 carbon atoms;
R³, is -R⁴SiR¹ₚR²_{q}, wherein
p is 0 to 3,
q is 0 to 3,
with the proviso that p + q is 3, and
R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹-, where R¹ and R² are as previously defined; and
x is 0 to 3, y is 1 to 4, z is 0 or 1, with the proviso that x+y+z=4;
and m = 1 or 2.

2. Use according to claim 1, wherein in the formula for the silicon containing compound:
R¹, which may be the same or different if more than one such group is present, is an alkyl, arylalkyl, alkylaryl or aryl group containing 1 to 30 carbon atoms, with the proviso that if more than one R¹ group is present the total number of carbon atoms of the R¹ groups is at most 60; and
R², which may be the same or different if more than one such group is present, is an alkoxy, aryloxy, alkylaryloxy, or arylalkyloxy group containing 1 to 15 carbon atoms, with the proviso that if more than one R² group is present the total number of carbon atoms in the alkyl moieties of the R ² groups is at most 40.

3. Use according to claim 1 or 2 wherein in the formula for the silicon containing compound:
R¹ is a linear or branched C₆- to C₂₂-alkyl group.

4. Use according to any of the preceding claims wherein in the formula for the silicon containing compound:
R² is a linear or branched C₁- to C₁₀-alkoxy group.

5. Use according to any of the preceding claims wherein in the formula for the silicon containing compound:
x = 1, y = 3, z = 0, and m = 1.

6. Use according to any of the preceding claims wherein the silicon containing compound comprises hexadecyl trimethoxy silane.

7. Use according to any of the preceding claims wherein the amount of the silicon containing compound is 0.001 to 5 wt% of the total composition.

8. Use according to any of the preceding claims wherein the polymer composition is a polyolefin composition.

9. Use according to claim 8 wherein the polyolefin composition comprises a crosslinkable polyolefin with hydrolysable silane groups.

10. Use according to claim 9 wherein the crosslinkable polyolefin with hydrolysable silane groups comprises a polyethylene with hydrolysable silane groups.

11. Use according to claims 9 or 10 wherein in the crosslinkable polyolefin with hydrolysable silane groups the silane groups are present in an amount of 0.001 to 15 wt%.

12. Use according to any one of claims 9 to 11 wherein the composition further comprises a silanol condensation catalyst.

13. Use according to claim 12 wherein the silanol condensation catalyst comprises an organic sulphonic acid.

14. Use according to claim 13 wherein the silanol condensation catalyst comprises an organic sulphonic acid comprising 10 C-atoms or more, the sulphonic acid further comprising at least one aromatic group.

15. Use according to any one of claims 12 to 14 wherein the silanol condensation catalyst comprises an organic sulphonic acid comprising the structural element:
Ar(So₃H)ₓ (II)
with Ar being an aryl group which may be substituted or non-substituted, and x being at least 1.

16. Use according claim 15 wherein in formula (II) Ar is substituted with at least one C₄- to C₃₀-hydrocarbyl group and the total silanol condensation catalyst comprises from 10 to 200 C-atoms.

## Patentansprüche

1. Verwendung einer Silicium enthaltenden Verbindung als Mittel zur Steuerung des pH-Wertes in einer Polymerzusammensetzung, die eine Brönsted-Säure umfaßt, wobei die Silicium enthaltende Verbindung eine Struktur aufweist, die der Formel
(R¹)ₓ[Si(R²)_{y}(R³)_{z}]ₘ (I)
entspricht, worin
R¹, das gleich oder verschieden sein kann, falls mehr als ein derartiger Rest vorliegt, ein monofunktioneller, oder wenn m = 2 ist, ein bifunktioneller, Kohlenwasserstoffrest mit 1 bis 100 Kohlenstoffatomen ist;
R², das gleich oder verschieden sein kann, falls mehr als ein derartiger Rest vorliegt, ein Kohlenwasserstoffrest mit 1 bis 100 Kohlenstoffatomen ist;
R³ gleich -R⁴SiR¹ₚR²_{q} ist, wobei
p gleich 0 bis 3 ist,
q gleich 0 bis 3 ist,
mit der Maßgabe, daß p + q gleich 3 ist, und
R⁴ gleich -(CH₂)ᵣYₛ(CH₂)ₜ- ist, wobei
r und t unabhängig voneinander 1 bis 3 sind,
s gleich 0 oder 1 ist und
Y ein bifunktioneller heteroaromatischer Rest ist, der aus -O-, -S-, -SO-, -SO₂-, -NH-, -NR¹- oder -PR¹- ausgewählt ist, wobei R¹ und R² wie bereits angegeben sind; und
x gleich 0 bis 3 ist, y gleich 1 bis 4 ist, z gleich 0 oder 1 ist, mit der Maßgabe, daß x + y + z = 4 ist; und
m = 1 oder 2 ist.

2. Verwendung nach Anspruch 1, wobei in der Formel der Silicium enthaltenden Verbindung:
R¹, das gleich oder verschieden sein kann, falls mehr als ein derartiger Rest vorliegt, eine Alkyl-, Arylalkyl-, Alkylaryl- oder Arylgruppe mit 1 bis 30 Kohlenstoffatomen ist, mit der Maßgabe, daß, falls mehr als ein derartiger Rest R¹ vorliegt, die Gesamtzahl der Kohlenstoffatome der Reste R¹ höchstens 60 beträgt; und
R², das gleich oder verschieden sein kann, falls mehr als ein derartiger Rest vorliegt, eine Alkoxy-, Aryloxy-, Alkylaryloxy- oder Arylalkyloxygruppe mit 1 bis 15 Kohlenstoffatomen ist, mit der Maßgabe, daß, falls mehr als ein derartiger Rest R² vorliegt, die Gesamtzahl der Kohlenstoffatome in den Alkyleinheiten der Reste R² höchstens 40 beträgt.

3. Verwendung nach Anspruch 1 oder 2, wobei in der Formel der Silicium enthaltenden Verbindung:
R¹ eine lineare oder verzweigte C₆-C₂₂-Alkylgruppe ist.

4. Verwendung nach einem der vorstehenden Ansprüche, wobei in der Formel der Silicium enthaltenden Verbindung
R² eine lineare oder verzweigte C₁-C₁₀-Alkoxygruppe ist.

5. Verwendung nach einem der vorstehenden Ansprüche, wobei in der Formel der Silicium enthaltenden Verbindung:
x = 1, y = 3, z = 0 und m = 1 sind.

6. Verwendung nach einem der vorstehenden Ansprüche, wobei die Silicium enthaltende Verbindung Hexadecyltrimethoxysilan umfaßt.

7. Verwendung nach einem der vorstehenden Ansprüche, wobei die Menge der Silicium enthaltenden Verbindung 0,001 bis 5 Gew.-% der gesamten Zusammensetzung beträgt.

8. Verwendung nach einem der vorstehenden Ansprüche, wobei die Polymerzusammensetzung eine Polyolefinzusammensetzung ist.

9. Verwendung nach Anspruch 8, wobei die Polyolefinzusammensetzung ein vernetzbares Polyolefin mit hydrolysierbaren Silangruppen umfaßt.

10. Verwendung nach Anspruch 9, wobei das vernetzbare Polyolefin mit hydrolysierbaren Silangruppen ein Polyethylen mit hydrolysierbaren Silangruppen umfaßt.

11. Verwendung nach Anspruch 9 oder 10, wobei in dem vernetzbaren Polyolefin mit hydrolysierbaren Silangruppen die Silangruppen in einer Menge von 0,001 bis 15 Gew.-% vorliegen.

12. Verwendung nach einem der Ansprüche 9 bis 11, wobei die Zusammensetzung ferner einen Silanolkondensationskatalysator umfaßt.

13. Verwendung nach Anspruch 12, wobei der Silanolkondensationskatalysator eine organische Sulfonsäure umfaßt.

14. Verwendung nach Anspruch 13, wobei der Silanolkondensationskatalysator eine organische Sulfonsäure mit 10 oder mehr C-Atomen umfaßt, wobei die Sulfonsäure ferner zumindest einen aromatischen Rest umfaßt.

15. Verwendung nach einem der Ansprüche 12 bis 14, wobei der Silanolkondensationskatalysator eine organische Sulfonsäure umfaßt, die das Strukturelement:
Ar(SO₃H)ₓ (II)
aufweist, wobei
Ar eine Arylgruppe ist, die substituiert oder unsubstituiert sein
kann, und
x mindestens 1 ist.

16. Verwendung nach Anspruch 15, wobei in der Formel (II) Ar mit zumindest einem C₄-C₃₀-Kohlenwasserstoffrest substituiert ist und der gesamte Silanolkondensationskatalysator 10 bis 200 C-Atome aufweist.

## Revendications

1. Utilisation d'un composé contenant du silicium comme agent d'ajustement de pH dans une composition à base de polymère comprenant un acide de Brönsted, dans laquelle le composé contenant du silicium à une structure correspondant à la formule :
(R¹)ₓ[Si(R²)_{y}(R³)_{z}]ₘ (I)
dans laquelle :
les groupes R¹, qui peuvent être identiques ou différents si plus d'un tel groupe est présent, représentent un résidu hydrocarbyle monofonctionnel ou, si m = 2, bifonctionnel comprenant de 1 à 100 atomes de carbone ;
les groupes R², qui peuvent être identiques ou différents si plus d'un tel groupe est présent, représentent un résidu hydrocarbyloxy comprenant de 1 à 100 atomes de carbone ;
R³ représente -R⁴SiR¹ₚR²_{q}, où :
p varie de 0 à 3,
q varie de 0 à 3,
à condition que p + q soit égal à 3, et
R⁴ représente -(CH₂)ᵣYₛ(CH₂)ₜ-, où r et t varient indépendamment de 1 à 3, s est égal à 0 ou 1, et Y est un groupe hétéroatomique bifonctionnel choisi parmi -O-, -S-, - SO-, -SO₂-, -NH-, -NR₁- ou -PR₁-, dans lesquels R¹ et R² sont tels que précédemment définis ; et
x varie de 0 à 3, y varie de 1 à 4, z est égal à 0 ou 1, à condition que x + y + z = 4 ; et
m = 1 ou 2.

2. Utilisation selon la revendication 1, dans laquelle, dans la formule pour le composé contenant du silicium :
les groupes R¹, qui peuvent être identiques ou différents si plus d'un tel groupe est présent, représentent un groupe alkyle, arylalkyle, alkylaryle ou aryle contenant de 1 à 30 atomes de carbone, à condition que si plus d'un groupe R¹ est présent, le nombre total d'atomes de carbone dans les groupes R¹ soit d'au plus 60 ; et
les groupes R², qui peuvent être identiques ou différents si plus d'un tel groupe est présent, représentent un groupe alkoxy, aryloxy, alkylaryloxy ou arylalkyloxy contenant de 1 à 15 atomes de carbone, à condition que si plus d'un groupe R² est présent, le nombre total d'atomes de carbone dans les parties alkyle des groupes R² soit d'au plus 40.

3. Utilisation selon la revendication 1 ou 2, dans laquelle, dans la formule du composé contenant du silicium :
R¹ est un groupe alkyle linéaire ou ramifié en C₆ à C₂₂.

4. Utilisation selon l'une quelconque des revendications précédentes, dans laquelle, dans la formule du composé contenant du silicium :
R² est un groupe alkoxy linéaire ou ramifié en C₁ à C₁₀.

5. Utilisation selon l'une quelconque des revendications précédentes, dans laquelle, dans la formule du composé contenant du silicium :
x = 1, y = 3, z = 0 et m = 1.

6. Utilisation selon l'une quelconque des revendications précédentes, dans laquelle le composé contenant du silicium comprend de l'hexadécyl triméthoxy silane.

7. Utilisation selon l'une quelconque des revendications précédentes, dans laquelle la quantité du composé contenant du silicium est de 0,001 à 5 % en poids de la composition totale.

8. Utilisation selon l'une quelconque des revendications précédentes, dans laquelle la composition à base de polymère est une composition à base de polyoléfine.

9. Utilisation selon la revendication 8, dans laquelle la composition à base de polyoléfine comprend une polyoléfine réticulable avec des groupes silane hydrolysables.

10. Utilisation selon la revendication 9, dans laquelle la polyoléfine réticulable avec des groupes silane hydrolysables comprend un polyéthylène avec des groupes silane hydrolysables.

11. Utilisation selon la revendication 9 ou 10, dans laquelle, dans la polyoléfine réticulable avec des groupes silane hydrolysables, les groupes silane sont présents en une quantité de 0,001 à 15 % en poids.

12. Utilisation selon l'une quelconque des revendications 9 à 11, dans laquelle la composition comprend, en outre, un catalyseur de condensation de groupe silanol.

13. Utilisation selon la revendication 12, dans laquelle le catalyseur de condensation de groupe silanol comprend un acide sulfonique organique.

14. Utilisation selon la revendication 13, dans laquelle le catalyseur de condensation de groupe silanol comprend un acide sulfonique organique comprenant 10 atomes de carbone ou plus, l'acide sulfonique comprenant, en outre, au moins un groupe aromatique.

15. Utilisation selon l'une quelconque des revendications 12 à 14, dans laquelle le catalyseur de condensation de groupe silanol comprend un acide sulfonique organique comprenant l'élément structural :
Ar(S0₃H)_{X} (II)
Ar étant un groupe aryle qui peut être substitué ou non substitué, et x étant d'au moins 1.

16. Utilisation selon la revendication 15, dans laquelle, dans la formule (II), Ar est substitué avec au moins un groupe hydrocarbyle en C₄ à C₃₀, et le catalyseur de condensation de groupe silanol total comprend de 10 à 200 atomes de carbone.
